# EUROPEAN PATENT APPLICATION

(11) **EP 1 402 790 A2**
(43) Date of publication of application: **31.03.2004**
(21) Application number: 02021653.7
(22) Date of filing: 27.09.2002
(51) Int. Cl.: A23P 1/16, A23L 1/05, A23J 3/00, A23G 3/00, A23G 1/00, A21D 13/00, A23L 1/053, A23L 1/054, A23L 1/056, A23L 1/0534, A61K 7/00

(54) **INTERFACE STABILISATION OF A PRODUCT WITH 2 OR MORE PHASES WITH A PROTEIN-POLYSACCHARIDE COMPLEX**

(71) Applicant: Nestec S.A., 1800 Vevey (CH)
(72) Inventor: Kolodziejczyk, Eric, 1800 Vevey (CH); Schmitt, Christophe, 1092 Belmont S/Lausanne (CH)
(74) Representative: Thomas, Alain

(57) **Abstract**

The present invention concerns a product taken from the group consisting of a foam, an emulsion, a foamed emulsion, a dispersed emulsion and a foamed dispersion, wherein the interface water-air, water-oil or water-solid comprises a complex formed instantaneously by the mixture of at least a protein (or peptide) and at least a polysaccharide oppositely charged or the mixture of two proteins oppositely charged, said product being in a pH range within which the electrostatic interaction between both compounds oppositely charged occurs and wherein the total amount of protein and polysaccharide is comprised between 0.01 and 5 % in weight.

## Description

The present invention concerns a two-phases or more product with enhanced stability.

A two-phases product, like a foamed product are very known on the market and appreciated by the consumer. An emulsion, like a mayonnaise, is also very spread on the market. For stabilizing the emulsion, an emulsifier is normally used, which is directly present in the bulk phase. The main drawback of this solution is the limitation of the diffusion of the emulsifier from the bulk to the interface resulting in a decrease in the final product stability. In the case of a foam, the control and design of texture is mainly achieved by adjusting the viscosity properties of the liquid bulk phase surrounding air bubbles (Walstra P. and De Roos A.L. (1993), Food Rev. Int., 9,503-525). To overcome the foam formation and foam stability problems, one generally combine surfactant molecules (phospholipids, fatty acids) together with tension active molecules (proteins). The former will initially decrease the interfacial area by adsorption at the interface, resulting in a high foam capacity. By contrast, the latter will form a viscoelastic layer around the bubbles, decreasing then the surface tension. This results in a higher stability of the foam. However, this combination has some drawbacks, since it requires the use of complex mixtures of surfactant and tension-active molecules. Moreover, it has been shown that both types of molecules are generally incompatible at the interface leading to interfacial phase separation and destabilisation (Mackie A.R. and al. (1999), J. Colloid Interf. Sc., 210, 157-166).

It is also possible to use protein-polysaccharide complexes to stabilize interfaces. This is the case for the US Patent No. 6'197'319, wherein a protein-polysaccharide complex is incorporated in a cosmetic composition, which is an emulsion. In this case, the complex is previously formed and then incorporated in the bulk. This is the same for the EP Patent No. 340'035 : a microfragmented ionic polysaccharide/protein complex dispersion is formed to be used as fat substitute in food products, such as ice cream, sald dressings, dips, spreads and sauces. The US Patent No. 3'944'680 concerns a process for the preparation of an aqueous oil emulsion of prolonged storage life. In this case, the complex protein/polysaccharide is formed in the bulk, and there is a problem of diffusion of the complex from the bulk to the interface as already mentioned in the preceding paragraph.

Hence, these protein-polysaccharide complexes have been shown to form upon electrostatic attraction in well defined conditions of pH, ionic strength, protein to polysaccharide ratio, total biopolymer concentration, temperature or pressure (Schmitt C. *et al*. (1998), Crit. Rev. Food Sci. Nutr., 38, 689-753). In addition, various studies have demonstrated that these complexes exhibited better functional properties such as gelation, emulsification and foaming than that of the biopolymers alone. However, it is also known that the formation of complexes through electrostatic attraction between protein and polysaccharide lead to the associative phase separation phenomena (Piculell L. and Lindman B. (1992), Adv. Colloid Interf. Sci., 41, 149-178; Doublier J.-L. et al. (2000), Curr. Opinion Colloid Interf. Sci., 5, 202-214) or complex coacervation (Bungenberg de Jong H.G. (1936), La coacervation complexe et son importance en biologie, E. Fauré-Fremiet Ed, vol 1, Paris: Hermann et Cie). During associative phase separation which is a time dependent mechanism, the initial electrostatic protein-polysaccharide complexes interact ones with the others because of charge neutralisation to increase the electrostatic entropy of the system by release of counter-ions in the medium (Tolstoguzov V.B. (1997), Protein-polysaccharide interactions, S. Damodaran and A. Paraf Eds, Food Proteins and their Applications, pp 171-198, New York: Marcel Dekker Inc). Coming closer to the thermodynamic equilibrium, the complexes become insoluble and form liquid droplets called coacervates. These coacervates finaly form a concentrated liquid phase at equilibrium with a very diluted phase containing mainly solvent (Mattisson K.W. *et al.* (1999), Macromol. Symp., 140, 53-76). The size of the successive entities formed ranged from tens of nanometers for the initial macromolecular complexes (Xia J. (1993) Macromolecules, 26, 6688-6690; Bowman W. (1997), Macromolecules, 30, 3262-3270) to hundreds of microns for the coacervates (Schmitt C. et *al.* (2001), Colloids and Surf. B: Biointerf., 20, 267-280). In terms of interfacial activity, it is well know that the coefficient of diffusion of the surface-active components is very important. Large molecular weight surface-active components (for example, protein-polysaccharide complexes) go very slowly at the interface to the contrary of low molecular weight surface-active components (sugar-esters, triglycerides). However, the former are much more effective for interfacial stabilisation (Dickinson E. and Galazka V.B. (1991), Food Hydrocolloids, 5, 281-296).

According to the present invention, it is possible to stabilise efficiently interfaces using protein-polysaccharide or protein-protein electrostatic complexes formed at the same time than the interface they have to stabilise, because they have smaller size and a higher diffusion coefficient. In this case, the protein-polysaccharide complexes will be soluble and with sufficiently low molecular weight to be at the interface.Based on these observations, the objective of the present invention is, in the case of a at least two phases product, to control the surface properties between said phases.

The present invention concerns a product taken from the group consisting of a foam, an emulsion, a foamed emulsion, a dispersed emulsion and a foamed dispersion, wherein the interface water-air, water-oil or water-solid comprises a complex formed instantaneously by the mixture of at least a protein (or peptide) and at least a polysaccharide oppositely charged or the mixture of two proteins oppositely charged, said product being in a pH range within which the electrostatic interaction between both compounds oppositely charged occurs and wherein the total amount of protein and polysaccharide is comprised between 0.01 and 5 % in weight.

The complex in the product of the invention is formed instantaneously, directly during the preparation of said product. The active compounds are in aqueous solutions or oil-in-water emulsions.

The purpose of the invention is to control the surface properties of the interfaces by using an ingredient mix of protein and polysaccharide or a mix of two proteins. The mix significantly enhances, in the case of foaming, the foam capacity, that means more foam is obtained and the foam stability (smaller air bubbles, less drainage). The mix can also be used for emulsions, and other at least two phases products.

The mix efficiency remains in the formation of electrostatic complexes under well defined conditions of pH (when electrostatic interaction occurs), temperature (from 0°C to room temperature), with a ratio protein to polysaccharide or ratio of both proteins from 1:20 to 20:1 and total biopolymer concentration between 0.01 and 5 % in weight. Under biopolymer, we understand the addition of the weight concentrations of protein and polysaccharide.

By using the complex in liquid form, in case of foam, it is possible to enhance the foam formation since the initially formed complex acts as surfactant. After the foam is formed, the complex further interacts one with the other to form the so-called coacervates. These coacervates exhibit high viscoelastic properties and by the way rearrange at the interface to form a viscoelastic film that stabilise the foam.

A product containing protein-polysaccharide or protein-protein complex obtained through ionic interaction is used to produce different types of interfaces from liquid dispersion. In a first step, the molecular complex acts as surfactant, so that the interfacial area is decreased. In a second step, the complex rearrange at the interface in order to form coacervates that spread around the air bubbles (or oil droplets) , forming a viscoelastic film that stabilises the bubbles (or oils droplets) against destabilisation.

The instant formation of the protein-polysaccharide or protein-protein complex results in a characteristic structural signature combining both a typical structure and distribution of fats and a typical structure and composition of viscoelastic films at the water/air or water/oil or water/solid interfaces. This can be demonstrated with various microscopy techniques, in particular, by showing specifically the location of the protein(s) and the polysaccharide components within the interfaces.

In the case of a foamed product, the active compounds are in aqueous form, and the interface concerned is an air-water interface. In the case of an emulsion, the active compounds are in an aqueous phase, and the interface concerned is an oil-water interface. In the case of a foamed emulsion, both air-water and oil-water interfaces are concerned. In the case of a dispersed emulsion, both air-solid and oil-water interfaces are concerned. In the case of a foamed dispersion, both air-solid and water-air interfaces are concerned.

The protein of the product is taken from the group consisting of a protein from milk, soy, egg, meat, fish and plant. Under plant, we understand mainly cereals but also leguminosea . Most preferably, the protein is β-lactoglobulin, gelatin, α-lactalbumin, bovin serum albumin, soy globulin, wheat protein, whey protein, soy protein.

The polysaccharide is taken from the group consisting of charged natural or synthetic polysaccharides. Most preferably, the polysaccharide is acacia gum, carboxy-methyl-cellulose, chitosan, xanthan, alginate, propyleneglycol alginate, carrageenans, low or high methoxylated pectins, arabinogalactans, rye arabinoxylans, wheat arabinoxylans.

The product of the invention can be used either per se or in mixture with another product. In the case of a use in the food area, the final product is ice cream, a culinary product, chocolate, dessert, a dairy product, wafers, sponge cakes or a petfood product. In this case, the product of the invention is present in an amount of 10 to 100 % of the final product in weight.

In the case of a use in the cosmetic or perfume area, the product is used in an amount comprised between 10 and 100 % of the final product in weight.

The invention concerns further the processes for the preparation of the product of the invention. There are different possible products and the following description will consider all these possible ways.

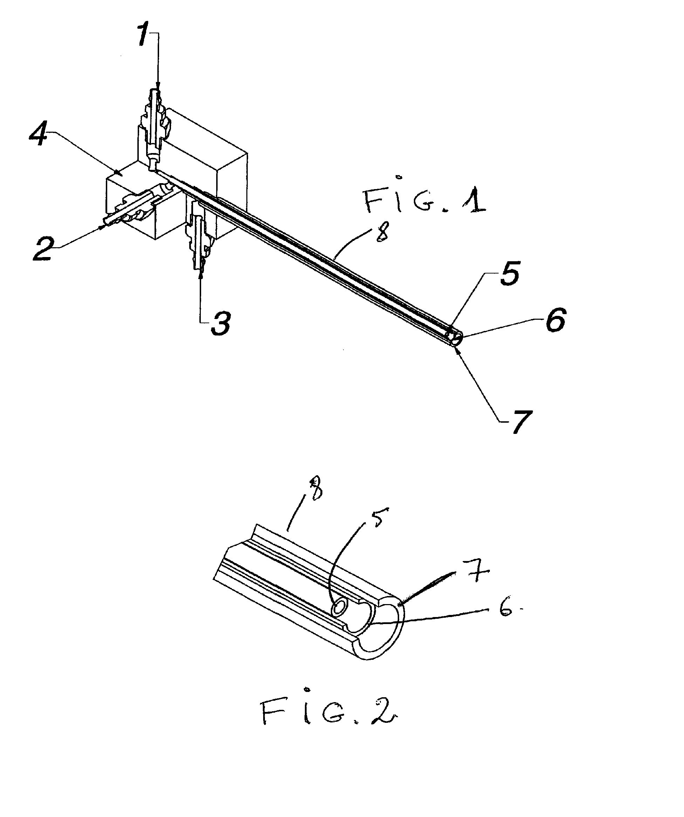

In the case of a preparation of a foam product, the way of preparation is following :
a solution or a bulk mass of the at least one protein and
a solution or a bulk mass of the at least one polysaccharide or a solution or a bulk mass of one protein and another solution or a bulk mass of one protein is injected with the air in a bulk mass or directly in the air in the case of two bulk masses using the multi-tube reactor described in Fig 1. The bulk mass can be a dairy product, containing sugar or not, containing a living organism or not. In this case, the polysaccharide is preferably acacia gum and the protein is β-lactoglobulin. The product has a final pH of around 4.2. The concentration of the protein and polysaccharide is around 0.01 to 5 % in weight. The ratio of protein to polysaccharide is around 20:1 to 1:20. The preparation is carried out at a temperature of around 4 to 50°C. In this case, the product obtained is the final product. The quantity of air injected is not critical and can vary between 10 and 700 % of the product.

According to a second embodiment of the preparation of a foam product, the way of preparation is following :a solution of at least one protein and a solution of at least one polysaccharide or a solution of one protein and another solution of one protein are mixed together in the presence of air. This is the basic concept of the invention : the mixing of both active compounds creates per se the formation of the foam. If necessary, it is also possible to carry out a subsequent whipping. According to this way of proceeding, the product obtained is not the final product. It is then mixed with a preparation for ice cream, or with a preparation for a wafer.

In the case of a preparation of an emulsion the way of preparation is following :

A first part of an emulsion is stabilised with at least one protein, a second part of a second emulsion is stabilised with at least one polysaccharide or a second protein, and both emulsions are mixed together.
The lipid used for the first and the second emulsion is preferably palm oil, palm kernel, sunflower, safflower or olive oil or butterfat or butterfat or any of their mixtures (peut etre qu'il y a encore d'autre huiles). The main interest of this embodiment is the preparation of a mayonnaise, for example an egg-yolk free or low-fat mayonnaise.In this case, the protein is preferably β-lactoglobulin and the polysaccharide is acacia gum. The product has a final pH of around 4.2. The concentration of the protein and polysaccharide is around 0.01 to 5 % in weight. The preparation is carried out at a temperature at which the fat is liquid. In this case, the product obtained is the final product. This is a non foamed product.

It is also possible, according to a second embodiment of the preparation of an emulsion to have a foamed emulsion. In this case, a solution of at least one protein and a solution of at least one polysaccharide or a solution of one protein and another solution of one protein are mixed together in the presence of air. This foamed product is then incorporated in an emulsion to obtain for example a foamed mayonnaise. In this case , the protein is β-lactoglobulin, the polysaccharide is acacia gum and the lipid phase is sunflower oil or olive oil. The overrun of whipping is around 10 to 700 %.

According to a further embodiment of the invention, it is possible to prepare directly a foamed emulsion. In this case, the way to proceed is following :
a bulk product is prepared using a first part of an emulsion which is stabilised with at least one protein, a second part of an emulsion is stabilised with at least one polysaccharide or a second protein, both emulsions are mixed together and diluted in the bulk product, then a new dispersion of the protein with a new dispersion of the polysaccharide are injected with air (using the foaming device described on Fig 1) in the bulk product to form the foamed bulk product.

In this case, the bulk product is preferably a mix for ice cream. The lipid used for the emulsion is preferably sunflower oil, palm oil, palm kernel oil or milk fat. The protein used is preferably β-lactoglobulin and the polysaccharide is acacia gum. The amount of both protein and polysaccharide is around 0.01 to 5 % in weight. The pH is around 4.2. The final product is then either frozen by a static freezing or by a dynamic freezing.

According to a further embodiment, a dispersed emulsion can be prepared. The way of preparation is following :
a first part of an emulsion is stabilised with at least one protein, a second part of an emulsion is stabilised with the at least one polysaccharide or a second protein, and both emulsions are mixed together, the obtained final emulsion being then mixed with a base comprising particles. In a preferred embodiment, the base comprising particles is a chocolate base containing for example sugar, cocoa particles, milk powder, lecithine and other aroma.

### The way of producing is following :

A first part of an emulsion is stabilised with at least one protein, a second part of a second emulsion is stabilised with at least one polysaccharide or a second protein, and both emulsions are mixed together.
The lipid used for the first and the second emulsion is preferably palm oil, palm kernel, sunflower, safflower or olive oil or butterfat or butterfat or any of their mixtures. The main interest of this embodiment is the preparation of a mayonnaise, for example an egg-yolk free or low-fat mayonnaise.In this case, the protein is preferably β-lactoglobulin and the polysaccharide is acacia gum. The product has a final pH of around 4.2. The concentration of the protein and polysaccharide is around 0.01 to 5 % in weight. The preparation is carried out at a temperature at which the fat is liquid. This emulsion product is then mixed with a bulk composed by lecithin, sugar and cocoa particles to obtain a chocolate base.

According to a last embodiment of the invention, a foamed dispersion is prepared. The way of producing is following:
a solution of the at least one protein and a solution of the at least one polysaccharide or a solution of one protein and another solution of one protein is injected with the air in a bulk of dispersed particles.

A typical example of a foamed dispersion is the preparation of a sorbet. In this case, a solution of the at least one protein and a solution of the at least one polysaccharide or a solution of one protein and another solution of one protein is injected with the air in a bulk mass. In this case , the bulk mass does not contain fat, but more a fruit, or juice or fruit puree.

The bulk dispersed particles can be a yoghurt preparation, or another acidic gel with bacteria or with a gel obtained by chemical acidification or heat treatment of gelling polysaccharides or proteins.

It is also possible to proceed according to a second way:
a solution of at least one protein and a solution of at least one polysaccharide or a solution of one protein and another solution of one protein are mixed together in the presence of air. The bulk of dispersed particles is then mixed with this foam to obtain the foamed dispersion.

For this last embodiment, it is possible to consider the preparation of wafers or caramel.

The invention concerns further the device for carrying out the process of the invention. This device comprises on a frame :
- a first pipe for the arrival of an emulsion or dispersion with a protein
- a second pipe for the arrival of the gas
- a third pipe for the arrival of an emulsion or dispersion with a polysaccharide,
these three pipes arriving on a main channel, being disposed perpendicular and staggered along said main channel , the first pipe forming the central pipe on the main channel, the second pipe forming the intermediate pipe on the main channel and the third pipe forming the external pipe on the main channel and wherein the outlet on the main channel of the central and the intermediate pipe are staggered.

The description is now made in relation with the figures, wherein
Figure 1 shows a perspective view of the device according to the invention and
Figure 2 is an enlarged view of the outlet of the device.

The injection system is on a frame (4). In this frame, there are 3 pipes. The pipe (1) is used for the arrival of the first dispersion with the protein, the pipe (2) is used for the entrance of the gas, that is the air and the pipe (3) is used for the arrival of the second dispersion with the polysaccharide. The 3 pipes of the device arrive on a main channel (8) : the are disposed perpendicularly and staggered along said main channel (8). This device is used for the different examples in the specification and hereunder.

The important feature is that at the point of the mixing of the gas with the first and the second dispersion the outlet of pipes (5) and (6) are staggered as shown on figure 2. This allows a reaction time between the components of the mixture.

### Examples

The following examples illustrate some applications of the present invention.

### Example 1

An concentrated emulsion is obtained preparing first an emulsion by mixing during 5 minutes using a mixer 0.74% whey protein concentrate, 66% sunflower oil and water at pH 4.2 by addition of lactic acid. A second emulsion is then prepared by mixing during 5 minutes using a mixer 0.23% acacia gum powder, 66% sunflower oil and water at pH 4.2 by addition of lactic acid. The final concentrated emulsion is obtained by mixing the two previously prepared emulsions at a 1:1 weight ratio and mixing during 10 minutes using a mixer or a high shear pump.

### Example 2

An ice cream mix is prepared from 12.67% palm kernel oil, 9.58% non-fat milk solids, 0.07% whey protein concentrate, 28.33% sucrose, 0.28% of a stabiliser blend containing hydrocolloids such as locust bean gum, guar, carrageenans, carboxymethylcellulose, water and emulsifiers. The pH of this first mix is ajusted to pH 4.2 by addition of lactic acid. A second mix is prepared from 12.67% palm kernel oil, 9.58% non-fat milk solids, 0.02% acacia gum powder, 28.33% sucrose, 0.28% of a stabiliser blend containing hydrocolloids such as locust bean gum, guar, carrageenans, carboxymethylcellulose, water and emulsifiers. The pH of this first mix is ajusted to pH 4.2 by addition of lactic acid. Both mix are then homogenised at 100 bars using a homogeniser and then pasteurised. After maturation at 4°C, the two ice cream preparations were mix together at a 1:1 mixing ratio and aerated at 4°C using the processing device described on Fig. 1 or a high pressure foaming device to obtain an overrun of 100%. The mix was then poured in molds and freezed at a temperature of -40°C.

### Example 3

A wafer recipe is obtained by mixing using a mixer 50% of a wheat flour containing 70% of starch and 4% of a whey protein concentrate with water and adjusting the pH to 4.2 by addition of lactic acid. Another recipe is obtained by mixing using a Hobbard mixer 50% of a wheat flour containing 70% of starch and 1.6% of an acacia gum powder with water and adjusting the pH to 4.2 by addition of lactic acid. Both recipes are then mixed together at a 1:1 mixing ratio and aerated using the mixing device described on Fig. 1 coupled with Hobbard mixer equiped with a thermostated bowl. This aerated wafer base is then poured in-between baking plates at 150°C and cooked to obtain wafers.

## Claims

1. A product taken from the group consisting of a foam, an emulsion, a foamed emulsion, a dispersed emulsion and a foamed dispersion, wherein the interface water-air, water-oil or water-solid comprises a complex formed instantaneously by the mixture of at least a protein (or peptide) and at least a polysaccharide oppositely charged or the mixture of two proteins oppositely charged, said product being in a pH range within which the electrostatic interaction between both compounds oppositely charged occurs and wherein the total amount of protein and polysaccharide is comprised between 0.01 and 5 % in weight.

2. A product according to claim 1, wherein the protein is taken from the group consisting of a protein from milk, soy, egg, meat, fish and plant.

3. A product according to claim 2, wherein the protein is β-lactoglobulin, wheat protein, whey protein, soy protein.

4. A product according to any of claims 1 to 3, wherein the polysaccharide is taken from the group consisting of gums, hydrocolloids and stabilizers.

5. A product according to claim 4, wherein the polysaccharide is acacia gum , β-glucan, chitosan, carboxy-methyl-cellulose, xanthan gum, Ax rye, Ax wheat.

6. A product according to any of claims 1 to 5, wherein the ratio protein to polysaccharide or protein to protein is comprised between 1:20 and 20:1.

7. The use of the product according to any of claims 1 to 6, in the ice-cream, low-fat mayonnaise, culinary, chocolate, dessert, wafers, sponge cakes, dairy and petfood area, wherein said product is used in an amount comprised between 10 and 100 % of the final product in weight.

8. The use of the product according to any of claims 1 to 6 in the cosmetic and perfume area, wherein said product is used in an amount comprised between 10 and 100 % of the final product in weight.

9. A process for the preparation of a foam product, wherein a solution or a bulk mass of the at least one protein and a solution or a bulk mass of the at least one polysaccharide or a solution or a bulk mass of one protein and another solution or a bulk mass of one protein is injected with the air in a bulk mass or directly in the air.

10. A process for the preparation of a foam product, wherein a solution of at least one protein and a solution of at least one polysaccharide or a solution of one protein and another solution of one protein are mixed together in the presence of air.

11. A process for the preparation of an emulsion, wherein a first part of an emulsion is stabilised with the at least one protein, a second part of an emulsion is stabilised with the at least one polysaccharide or a second protein, and both emulsions are mixed together.

12. A process for the preparation of a foamed emulsion, wherein a bulk product is prepared, a first part of an emulsion is stabilised with at least one protein, a second part of an emulsion is stabilised with at least one polysaccharide or a second protein, both emulsions are mixed together and diluted in the bulk product, then a new solution of the protein with a new solution of the polysaccharide are injected with air in the bulk product to form the foamed bulk product.

13. A process for the preparation of a dispersed emulsion, wherein a first part of an emulsion is stabilised with at least one protein, a second part of an emulsion is stabilised with the at least one polysaccharide or a second protein, and both emulsions are mixed together, the obtained final emulsion being then mixed with a base comprising particles.

14. A process for the preparation of a foamed dispersion, wherein a solution of the at least one protein and a solution of the at least one polysaccharide or a solution of one protein and another solution of one protein is injected with the air in a bulk of dispersed particles.

15. A device for carrying out the process according to any of claims 9 to 14, which comprises on a frame :
- a first pipe for the arrival of an emulsion or dispersion with a protein
- a second pipe for the arrival of the gas
- a third pipe for the arrival of an emulsion or dispersion with a polysaccharide,
these three pipes arriving on a main channel, being disposed perpendicular and staggered along said main channel , the first pipe forming the central pipe on the main channel, the second pipe forming the intermediate pipe on the main channel and the third pipe forming the external pipe on the main channel and wherein the outlet on the main channel of the central and the intermediate pipe are staggered.
